**Europäisches Patentamt**

**European Patent Office**

**Office européen des brevets**

(19)

(11) Veröffentlichungsnummer: **0 041 144**
**B1**

(12) ## EUROPÄISCHE PATENTSCHRIFT

(45) Veröffentlichungstag der Patentschrift:
**13.04.83**

(51) Int. Cl.³: **B 01 J 4/00**, B 01 J 8/06

(21) Anmeldenummer: **81103509.6**

(22) Anmeldetag: **08.05.81**

(54) **Verfahren und Anordnungen zum Beschicken von Rohrreaktoren mit körnigen Feststoffen.**

(30) Priorität: **02.06.80 DE 3020845**

(43) Veröffentlichungstag der Anmeldung:
**09.12.81 Patentblatt 81/49**

(45) Bekanntmachung des Hinweises auf die Patenterteilung:
**13.04.83 Patentblatt 83/15**

(84) Benannte Vertragsstaaten:
**BE DE FR GB IT**

(56) Entgegenhaltungen:
**DE-A-2 849 664**
**DE-B-1 069 580**
**GB-A-1 081 873**
**US-A-3 261 415**

(73) Patentinhaber: **BASF Aktiengesellschaft,
Carl-Bosch-Strasse 38, D-6700 Ludwigshafen (DE)**

(72) Erfinder: **Magin, Rudolf, Dr., Laurentiusstrasse 2,
D-6707 Schifferstadt (DE)**
Erfinder: **Nenninger, Franz, Zaehringerstrasse 25,
D-6900 Heidelberg (DE)**
Erfinder: **Engert, Gerd-Juergen, Dr., Muehlaustrasse 4,
D-6700 Ludwigshafen (DE)**

### Verfahren und Anordnungen zum Beschicken von Rohrreaktoren mit körnigen Feststoffen

Die Erfindung betrifft Verfahren zum mechanischen Beschicken einer Vielzahl von Rohren in Rohrreaktoren mit körnigen Feststoffen, vorzugsweise mit Katalysatoren, unter Einsatz einer regelbaren Meßvorrichtung und im besonderen die Zwischenschaltung von programmierbaren Druckverlustmessungen sämtlicher Rohre einzeln nacheinander, nach dem Einbringen einer Füllguthauptmenge und mit aus jeder Einzelmessung resultierendem Regeleingriff in die Meßvorrichtung zum Einbringen der Restmenge, sowie Anordnungen zur Ausführung dieses Verfahrens.

Eine ältere DE-Patentanmeldung betrifft ein Verfahren, nach dem körnige Feststoffe, vorzugsweise Katalysatoren, mit Hilfe kontinuierlich fördernder und regelbarer Dosiervorrichtungen, wie z. B. Dosierbandwagen, über eine Leitvorrichtung in die Reaktorrohre eingebracht werden. Das Verfahren kann außer mit homogen beschaffenen Feststoffen auch programmgesteuert mit gemischten Feststoffen von unterschiedlicher Beschaffenheit ausgeführt werden.

Trotz der hohen Reproduzierbarkeit dieses mechanischen Füll- und Dosierverfahrens treten bei der Befüllung großer technischer Reaktoren stärkere Schwankungen des Druckverlustes einzelner befüllter Rohre auf. Dies ist im wesentlichen auf zwei Ursachen zurückzuführen:

Zur Befüllung großer technischer Röhrenreaktoren werden Katalysatormengen von etwa 50 Tonnen und mehr gebraucht. Bei der Herstellung derartig großer Mengen treten zwangsläufig geringe Unterschiede der physikalischen Eigenschaften auf, wie z. B. im Schüttgewicht, in der Oberflächenrauhigkeit, der Bruchfestigkeit usw.

Bei einem technischen Röhrenreaktor mit beispielsweise bis zu 40 000 Einzelrohren ist es ferner praktisch unmöglich, nur Rohre mit exakt gleichem Innendurchmesser zu verwenden. Die Toleranzen der Rohrabmessungen betragen z. B. bei Röhrenreaktoren für den Acrylsäureprozeß ±1,5%, nach DIN-Vorschriften sind sogar ±2,5% zulässig.

Da größere Unterschiede im Druckverlust der Einzelrohre aus verfahrenstechnischen Gründen nicht auftreten dürfen, sind bisher nach der vollständigen Befüllung des Reaktors noch zwei Arbeitsgänge notwendig gewesen, nämlich Differenzdruckmessungen an den einzelnen Rohren und ein Druckabgleich mit dem Ziel der Herstellung gleicher Druckverluste für sämtliche Rohre. Diese Arbeitsgänge bringen einen Personal- und Zeitaufwand mit sich, der mit dem des eigentlichen Füllvorgangs vergleichbar ist, also z. B. ca. 700 Mannstunden pro Reaktor. — Der Erfindung liegt nun die Aufgabe zugrunde, das aus der obengenannten Anmeldung bekannte mechanische Verfahren zum beschleunigten Beschicken von Rohrreaktoren mit mechanischen Mitteln hinsichtlich des Druckverlustabgleichs bereits während des Befüllens so zu ergänzen, daß ein zusätzlicher Druckabgleich nach der vollständigen Füllung des Reaktors entfallen kann.

Erfindungsgemäß wird diese Aufgabe dadurch gelöst, daß während des Beschickens der Rohre ein mengenmäßig konstanter Gasstrom erzeugt wird, der jeweils nach der Füllung eines einzelnen Rohres zeitweise über ein oder mehrere steuerbare Ventile durch dieses gefüllte Rohr geleitet wird, wobei gleichzeitig eine Druckverlustmessung vorgenommen und mit deren vom vorgegebenen Sollwert verglichenen Meßwert eine kleine zusätzliche Schüttgutmenge bestimmt und als Restmenge in das gemessene Rohr nachgetragen wird, und daß danach mittels einer Programmsteuerung die in gleicher Weise dosierte mechanische Füllung des nächsten Rohres mit nachfolgender Druckverlustmessung und Nachdosieren der Restmenge ausgelöst wird.

Dem Verfahren nach der Erfindung liegt die aus der eingangs erwähnten Veröffentlichung bekannte gravimetrische Dosierung des zu füllenden Feststoffs zugrunde. Der Forderung nach einer homogenen Schüttung dieses Feststoffs statt einer variierbaren gemischten kann man dadurch gerecht werden, daß der Einfüllvorgang kontinuierlich abläuft und insbesondere das Füllgut mit konstantem Massenstrom über die gravimetrisch arbeitende Meßeinrichtung in die Rohre eingetragen wird. Als Meßvorrichtung eignet sich besonders gut eine Dosierbandwaage oder ein vergleichbar gravimetrisch förderndes Dosiersystem mit hohem Stellverhältnis für den zu variierenden Massenstrom.

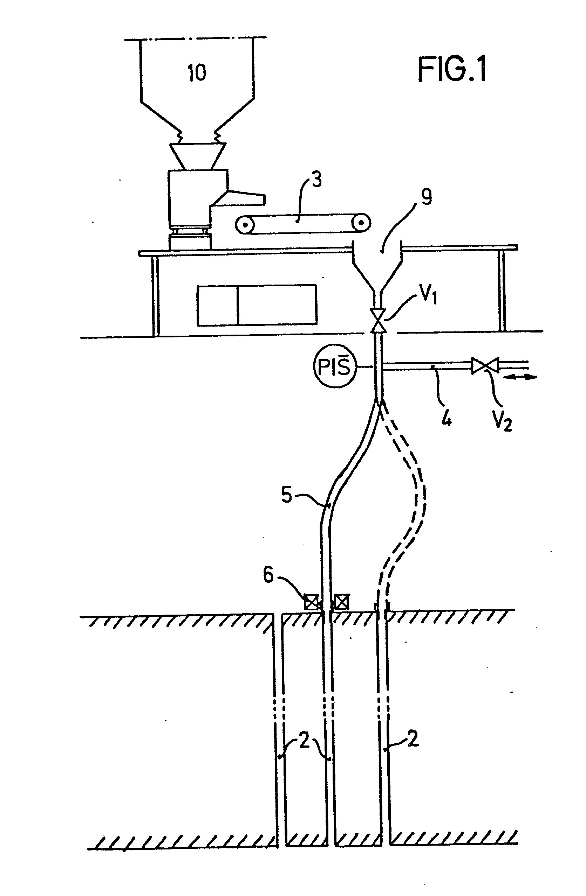

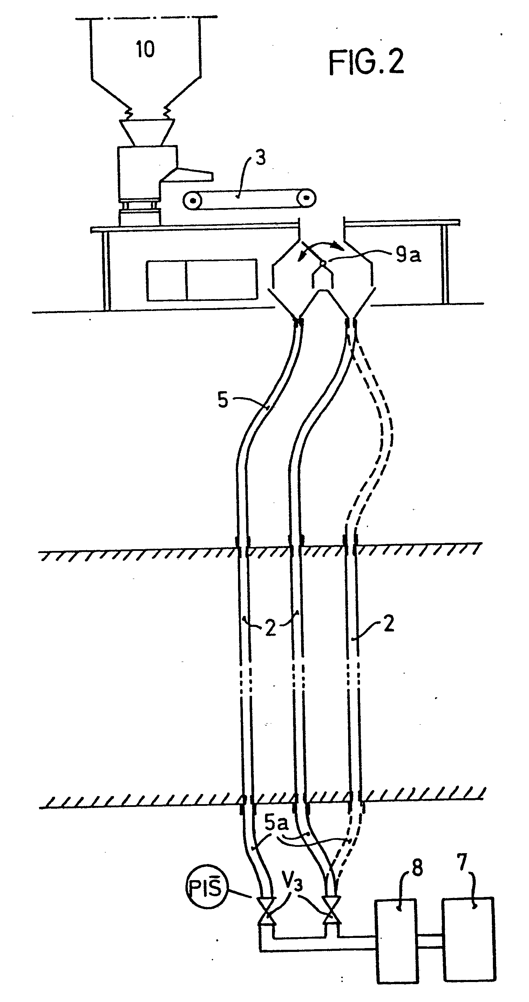

Für die Ausführung des Verfahrens kommen zwei unterschiedliche Anordnungen in Betracht. Die Anordnung 1 gemäß Fig. 1 der zugehörigen Zeichnungen wird dann eingesetzt, wenn der Reaktor nur von seiner Oberseite her zum Befüllen der gebündelten Reaktorrohre zugänglich ist. Bei der Anordnung 2 nach Fig. 2 muß der Reaktor sowohl von seiner Ober- als auch von seiner Unterseite her zugänglich sein. In gewissen Fällen kann die Anordnung 2 insofern Vorteile mit sich bringen, weil dann ein staubförmig feiner Abrieb des einzufüllenden Feststoffs in einem Filter ausgeschleust werden kann.

### Füllvorgang von Anordnung I

Die gesamte Einrichtung ist in Fig. 1 schematisch dargestellt. Die Füllung läuft folgendermaßen ab:

1.  Hauptdosierung
    Das Reaktorrohr (2) wird mit einem konstanten Massenstrom $\dot{m}_1$ des Füllguts aus dem Vorratsbehälter 10 mittels der Dosierbandwaage 3 während einer vorgegebenen Zeit $T_1$ befüllt.

$\dot{m}_1$ und $T_1$ werden so ausgewählt, daß die Füllmenge $M_1 = \dot{m}_1 \cdot T_1$ etwas kleiner ist als die gesamte Füllmenge M.

$$M = \int_0^T \dot{m}(t)\,dt; \; M_1 < M \, ,$$

T = gesamte Füllzeit pro Rohr,
M = gesamte Füllmenge pro Rohr.

$M_1$ soll nur geringfügig kleiner sein als M und ist zweckmäßig experimentell zu ermitteln.

2.　Nach Ablauf der Füllzeit $T_1$ jedes einzelnen Rohres 2 wird das Ventil $V_1$ geschlossen und Ventil $V_2$ kurzzeitig geöffnet. Durch die in das Rohr eingefüllte Menge $M_1$ tritt nun über den Rohrstutzen 4 ein Gasstrom, der mit Hilfe einer Durchflußregelung konstant gehalten wird. Die untere Öffnung des zu füllenden Rohres 2 hat eine direkte Verbindung zur Atmosphäre. Über der eingebrachten Schüttung im Rohr 2 stellt sich dann ein Druck, der Effektivdruck $p_e$ ein, der dem Druckverlust der Schüttung $M_1$ entspricht. Der Meßwert $p_1$ wird mit einem vorgegebenen Sollwert p, der der Menge M entspricht, verglichen und die zusätzliche Schüttmenge $M - M_1$ errechnet, die noch zuzudosieren ist. Der Zusammenhang zwischen $p - p_1$ und $M - M_1$ ist eine näherungsweise lineare Beziehung.

3.　Es wird danach der Zustand für die Hauptdosierung des nächsten Rohres 2 wieder hergestellt. Die fehlende Menge $M - M_1$ wird nachdosiert. Hierzu wird mittels der die ganze Anordnung zeitlich beeinflussenden Programmsteuerung die Geschwindigkeit der Dosierbandwaage 3 verändert, d. h. mittels dieser Waage eine Feindosierung vorgenommen. Von besonderem Vorteil ist hierfür der Einsatz einer Dosierbandwaage mit besonders hohem Stellverhältnis und sehr kurzer Einschwingzeit anstelle einer sonst möglichen Grob- und Feindosierungseinrichtung. Für die Grob- und Feindosierung wird die Dosierbandwaage in Form eines Start-Stop-Betriebs aktiviert, für die eine Programmsteuerung bekannter Art aufgebaut wird.

4.　Nach Beendigung des Vorganges 3, also nach Ablauf der Zeit T, erfolgt eine kontrollierende Druckmessung über die Schüttung im Rohr 2 entsprechend den Verhältnissen, wie oben unter 2 beschrieben. Weicht der Meßwert von dem Sollwert p unter Vorgabe eines gewissen Toleranzbandes ab, so erfolgt eine Signalgebung im Rahmen der Programmsteuerung.

Um den Druckabfall an der Schüttung im jeweiligen Rohr 2 möglichst genau messen zu können, ist ein gasdichter Abschluß zwischen dem oberen stirnseitigen Ende des Reaktorrohrs und dem Einfüllstutzen des flexiblen Gewebeschlauches 5 erforderlich, mit dem die Ablaufleitung unterhalb des Ventils V1 nacheinander mit den zu füllenden Rohren 2 verbunden werden. Im einfachsten Fall geschieht dies durch manuelles Anpressen des Einfüllstutzens mit einer zwischengelagerten Weichdichtung. Eine Automatisierung dieses Vorganges erreicht man durch Anbringen eines Elektromagneten 6, der ringförmig den konischen Einfüllstutzen umschließt und der für die Dauer der Druckmessung diesen Stutzen auf das Ende des Reaktorrohres 2 drückt. Dieser Elektromagnet 6 wird von der Programmsteuerung betätigt.

Füllvorgang nach Anordnung II (Fig. 2)

Das Füll- und Dosiersystem für die Reaktorrohre 2, bestehend aus der regelbaren Dosierbandwaage 3 und flexiblen Gewebeschläuchen 5 zu den Reaktorrohren hin, ist das gleiche wie bei Anordnung I. — Die Vorrichtung zur Erzeugung des konstanten Gasstromes, vorzugsweise eine mengengeregelte Saugpumpe 7, wird in diesem Fall an der Unterseite des Reaktors angeschlossen. Die Abdichtung der flexiblen Schläuche 5a gegenüber den unteren stirnseitigen Enden der Rohre 2 wird wie bei Anordnung I vorgenommen. Jedes Rohr 2 wird so lange mit dem Feststoff beschickt, bis ein vorgewählter Druckabfall an der Schüttung am Rohr erreicht ist. Es erweist sich als vorteilhaft, wenn die Druckmeßeinrichtung PIS mit zwei oder mehr Schaltkontakten versehen ist, über die dann eine zeitlich aufeinanderfolgende Haupt- und Feindosierung mittels der Dosierbandwaage 3 vorgenommen werden kann. Es wird hierdurch eine höhere Dosiergenauigkeit erreicht und Hold-Up im Dosiersystem, der im Nachlauf als zusätzliches Füllgut in das jeweilige Rohr 2 gefördert wird, kann sehr klein gehalten werden.

Um das gesamte System vom staubförmigen feinen Abrieb des zu füllenden Feststoffs weitgehend freizuhalten, empfiehlt es sich indes, den Gasstrom von der Reaktoroberseite zur Reaktorunterseite zu führen, d. h. an der Unterseite des Reaktors einen Vakuumerzeuger 7 mit Durchflußregler zu installieren. Auf diese Saugseite des Vakuumsystems kann dann ein Staubabscheider 8 angebracht werden (Fig. 2).

Bei beiden Anordnungen (I und II) ist es möglich, mit Hilfe einer Leit- und Lenkvorrichtung 9, die eine Weiche 9a enthält, die jeweiligen Einfüllsysteme unterhalb der Dosierbandwaage 3 mehrfach anzuordnen. In Fig. 2 ist eine solche Doppelanordnung schematisch wiedergegeben. Die Weichenvorrichtung 9a ist in diesem Fall in die zentrale Programmsteuerung einzubeziehen.

**Patentansprüche**

1.　Verfahren zum Beschicken einer Vielzahl von Rohren in Rohrreaktoren mit körnigen Feststoffen, vorzugsweise mit Katalysatoren, die dazu aus einem oder mehreren Vorratsbehältern einer steuerbaren Meßvorrichtung zugeführt und von dort über Leit- und Lenkvorrichtungen sowie über flexible Schlauchverbindungen in die zu füllenden Rohre nacheinander eingebracht werden, dadurch gekennzeichnet, daß während des Beschickens der Rohre (2) ein mengenmäßig konstanter Gasstrom erzeugt wird, der jeweils nach der Füllung eines einzelnen Rohres zeitweise über ein oder mehrere steuerbare Ventile durch dieses gefüllte Rohr geleitet wird, wobei gleichzeitig eine Druckverlustmessung vorgenommen wird, daß mit deren mit dem vorgegebenen Sollwert verglichenen Meßwert eine kleine zusätzliche Schüttgutmenge bestimmt und als Restmenge in das gemessene Rohr nachgetragen wird, und daß danach mittels einer Programmsteuerung die in gleicher Weise dosierte mechanische Füllung des nächsten Rohres mit nachfolgender Druckverlustmessung und Nachdosieren der Restmenge ausgelöst wird.

2. Verfahren nach Anspruch 1, gekennzeichnet durch die Anwendung einer Dosierbandwaage mit kurzer Einschwingzeit und hohem Stellverhältnis als gravimetrisch wirkende Meßvorrichtung für die Haupt- und Restmenge des nacheinander in die Rohre einzubringenden Füllguts.

3. Anordnung zur Ausführung des Verfahrens nach Anspruch 1, gekennzeichnet durch Einrichtungen, die so ausgestattet sind, daß der mengenmäßig konstante, zeitweise durch einzelne vorgefüllte Rohre zu leitende Gasstrom als Druckstrom über einen in die Ablaufleitung einer Leit- und Lenkvorrichtung (9) für das Füllgut einmündenden und ein steuerbares Ventil (V2) enthaltenden Rohrstutzen (4) eingeführt wird, derart, daß beim Öffnen dieses Ventils (V2) ein weiteres Ventil (V1) in der Ablaufleitung gleichzeitig geschlossen wird, wobei die Druckmessung (PIS) oberhalb der Füllgutfüllung des jeweiligen Rohres erfolgt.

4. Anordnung zur Ausführung des Verfahrens nach Anspruch 1, gekennzeichnet durch Einrichtungen, die so ausgestattet sind, daß der mengenmäßig konstante, zeitweise nacheinander durch vorgefüllte Rohre (2) zu leitende Gasstrom als Saugstrom erzeugt wird, und durch ein oder mehrere für eine Saugdruckmessung zeitweise zu öffnende Ventile (V3), die am unteren Ende der Rohre (2) angeordnet sind.

5. Anordnung nach Anspruch 4, dadurch gekennzeichnet, daß in der eine Saugzugpumpe (7) über die Ventile (V3) mit den unteren Enden der Rohre (2) verbindenden Leitung (5a) ein Filter (8) für staubförmigen Abrieb des Füllguts angeordnet ist.

6. Anordnung nach Anspruch 3 bis 5, gekennzeichnet durch die Verwendung von Druckmeßgeräten (PIS) mit Schaltkontakten, über welche das Stellverhältnis der Meßvorrichtung (3) für die im Rahmen einer Feindosierung nachzufüllende Restmenge des Füllguts selbsttätig veränderbar ist.

**Claims**

1. A process für charging a large number of tubes in a tubular reactor with granular solids, preferably with catalysts, which, for this purpose, are fed from one or more stock vessels to a controllable metering device and from there, via guiding and directing devices and flexible hose connections, successively into the tubes to be filled, wherein, during the packing of the tubes (2), a stream of gas of constant amount is generated, which can, after an individual tube has been packed, be passed temporarily, via one or more controllable valves, through this packed tube, a pressure drop measurement being carried out at the same time, wherein the differential between the measured value and the predetermined desired value is used to determine a small additional amount of packing material which is subsequently introduced into the tube which has been subjected to measurement, and wherein thereafter a program control triggers the mechanical packing of the next tube, metered in the same manner, with subsequent pressure drop measurement and metering of the additional amount.

2. A process as claimed in claim 1, wherein a metering belt-weigher with a short settling time and a wide adjustment range is used as the gravimetric metering device for the principal amount and residual amount of the packing to be introduced successively into the tubes.

3. An arrangement for carrying out the process as claimed in claim 1, comprising devices which are so designed that the constant-amount stream of gas which is to be passed temporarily through individual pre-packed tubes is introduced, as a stream under pressure, via a nozzle (4) which opens into the discharge line of a guiding and directing device (9) for the packing material and possesses a controllable valve (V2), in such a way that, on opening this valve (V2), a further valve (V1) in the discharge line is closed simultaneously, the pressure measurement (PIS) taking place above the packing in the particular tube.

4. An arrangement for carrying out the process as claimed in claim 1, comprising devices which are so designed that the constant-amount stream of gas to be passed temporarily through successive pre-packed tubes (2) is generated as a suction stream; and one or more valves (V3), to be opened temporarily for carrying out the suction measurement, which are located at the lower end of the tubes (2).

5. An arrangement as claimed in claim 4, wherein a filter (8) for abraded dust from the packing is located in the line (5a) which connects a suction pump (7), via the valves (V3), with the lower ends of the tubes (2).

6. An arrangement as claimed in claims 3 to 5, wherein pressure-measuring instruments (PIS) with switch contacts are used, by means of which contacts the adjustment range of the metering device (3) is automatically variable to suit the remaining amount of packing to be introduced by precision metering.

## Revendications

1. Procédé pour charger les tubes de réacteurs à tubes multiples avec des matériaux solides particulaires, en particulier avec des catalyseurs, qui sont amenés à partir d'un réservoir ou d'une série de réservoirs de stockage à un dispositif de mesurage programmable et de celui-ci, par des installations de transport et de guidage et par des tuyaux flexibles, aux tubes à remplir successifs, caractérisé en ce que, pendant le chargement des tubes (2), on produit un courant gazeux à volume constant, auquel on fait traverser, après le remplissage de chaque tube individuel, par une ou plusieurs vannes programmables, le tube rempli pendant une durée déterminée en procédant simultanément à une mesure de la perte de pression, dont la valeur, comparée à la valeur de consigne prédéterminée, détermine une petite quantité supplémentaire du matériau à charger, qui est ajoutée en tant que charge résiduelle dans le tube examiné, une commande programmée amenant ensuite l'opération identique de remplissage mécanique dosé du tube suivant avec mesure de la perte de pression et addition de la charge résiduelle déterminée.

2. Procédé suivant la revendication 1, caractérisé en ce que l'on emploie comme installation pour la mesure par gravimétrie de la charge principale et de la charge résiduelle du matériau à introduire dans les tubes une balance doseuse à bande à réponse rapide et avec un rapport de réglage élevé.

3. Agencement pour la mise en oeuvre du procédé selon la revendication 1, caractérisé en ce qu'il comporte des dispositifs permettant d'introduire le courant gazeux à volume constant, qui doit passagèrement traverser chacun des tubes chargés, sous forme d'un courant refoulant à travers une tubulure (4) épuipée d'une vanne programmable (V₂) et débouchant dans le conduit de chargement d'une installation de transport et de guidage (9), une deuxième vanne (V₁), placée dans le conduit de chargement, étant fermée lorsque la vanne (V₂) est ouverte et la mesure de la pression (PIS) étant réalisée dans le tube concerné au-dessus du matériau qui y a été introduit.

4. Agencement pour la mise en oeuvre du procédé selon la revendication 1, caractérisé en ce qu'il comprend des dispositifs permettant de produire le courant gazeux à volume constant à faire passer passagèrement à travers les tubes (2) chargés successifs sous forme d'un courant aspirant et une ou plusieurs vannes (V₃), disposées aux extrémités inférieures des tubes (2) et pouvant être ouvertes passagèrement pour effectuer la mesure de la pression d'aspiration.

5. Agencement suivant la revendication 4, caractérisé en ce qu'un filtre (8) pour la séparation des fines libérées du matériau de remplissage par le frottement est disposé sur le conduit (5a) qui relie les extrémités inférieures des tubes (2), en passant par les vannes (V3), à une pompe aspirante (7).

6. Agencement suivant l'une des revendications 3 à 5, caractérisé en ce qu'il comprend des appareils de mesure de la pression (PIS) équipés d'organes de commande permettant une adaptation automatique du rapport de réglage de l'installation de dosage (3) à la charge résiduelle du matériau à ajouter en vue du réglage précis de chaque charge.

FIG.1

FIG.2